# EUROPEAN PATENT APPLICATION

(11) **EP 4 672 632 A1**
(43) Date of publication of application: **31.12.2025**
(21) Application number: 24185524.6
(22) Date of filing: 28.06.2024
(51) Int. Cl.: H04B 7/155, H04B 7/26, H04W 40/22, H04W 84/04, H04W 84/06, H04W 84/18

(54) **AN IRS NODE, AND A MANAGING APPARATUS, A COMPUTER PROGRAM AND A METHOD THEREOF**

(71) Applicant: Deutsche Telekom AG, 53113 Bonn (DE)
(72) Inventor: XU, Bangnan, 64291 Darmstadt (DE)
(74) Representative: 2SPL Patentanwälte PartG mbB

(57) **Abstract**

Examples relate to an Intelligent Relay System, IRS, node, and a managing apparatus, a computer program and a method thereof. The IRS node (40, 510 to 530, 610 to 630) comprises a management and control module (41, 517 to 537, 617 to 637), a routing module (42, 518 to 538, 618 to 638), one or more interfaces (43) and one or more communication modules (44). The management and control module (41, 517 to 537, 617 to 637) is configured to deploy the IRS node to a position. The routing module (42, 518 to 538, 618 to 638) is configured to obtain a routing table for forwarding packets. The one or more interfaces (43) is configured to communicate with a central IRS management module (80). The one or more communication modules (44) is configured to enable network connectivity of the IRS node in an IRS. As the IRS node may have different communication modules, it may flexibly work in different roles in the IRS, so that making the IRS to be flexible to deploy and modify according to the needs for network access by UEs.

## Description

### Field

Examples relate to an intelligent relay system (IRS) node and a managing apparatus, a computer program and a method thereof, more particularly, but not exclusively, to a concept for deploying an IRS node flexibly and autonomously to obtain a flexible IRS.

### Background

With the success of low orbit satellite communication for mobile phones, satellite communication has been regarded as one important part of future mobile networks. One reason for that is the unlimited coverage of satellite communication. However, satellite communication has its limitations, such as high costs and low capacity in comparison with a terrestrial mobile network.

However, 5G (5th Generation) or future terrestrial mobile networks using mid or high band spectrum has an inherent coverage problem. To solve this coverage issue, Integrated Access and Backhaul (IAB) has been specified in 3GPP TS 38.401 V18.1.0 (2024-03), (3^{rd} Generation Partnership Project, Technical Specification, Technical Specification Group Radio Access Network, NG-RAN (Next Generation-RAN); Architecture description (Release 18)). IAB allows multi-hop backhauling using the same frequencies employed for user equipment (UE) access or a distinct, dedicated, frequency. The IAB Mobile Termination (MT) antenna is either an independent set of arrays or they share the same antennas used for access. IAB specifications define two node types: IAB node and IAB donor. IAB donors terminate the backhaul traffic from distributed IAB nodes. Both IAB donors and IAB nodes can serve mobile UEs in the usual way.

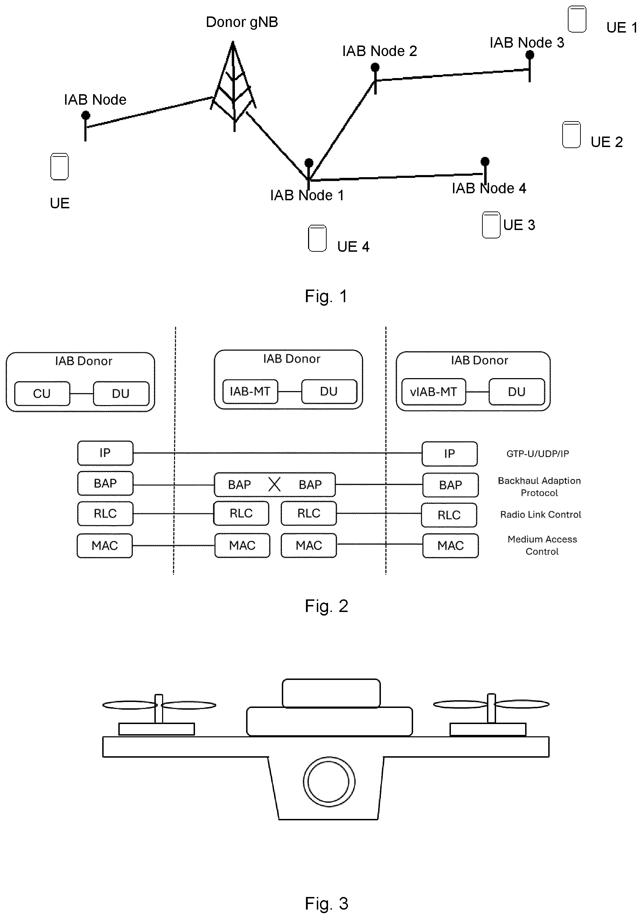

Fig. 1 shows an example of IAB implementation. The Next Generation Node B (gNB) that supports IAB is called Donor gNB. UE1 and UE2 that otherwise cannot access the gNB are connected with it thanks to the forwarding IAB node1, IAB node 2 and IAB node3, while UE3 can access the mobile network via forwarding IAB node 4 and IAB node1.

Fig. 2 shows the basic architecture and protocol stack of lAB. IAB uses the split gNB model having CU (Control Unit) and DU (Distributed Unit) that are coupled via F1 interface specified in 3GPP TS 38.470. The IAB donor in gNB has a CU to couple with DUs in IAB nodes.

Although IAB can extend the 5G coverage, there are limitations to deploy lAB for coverage extension. For example, the limitations may include: there must be a donor gNB to integrate any IAD node, which reduces the flexibility in deploying an IAB; each IAD node needs a DU, which increases costs of IAB nodes; the connection of CU and DU is via MT, which reduces efficiency of spectrum usage; and/or IAB nodes are deployed statistically as they have no self-organizing capability.

### Summary

Examples are based on the finding that communication modules of the IRS node may be deployed flexibly so that the IRS node can work in different roles based on different configuration, so that an IRS based on such IRS nodes could be deployed flexibly and autonomously.

Some examples provide an intelligent relay system (IRS) node which could be used in an intelligent relay system (IRS). The IRS node comprises a management and control module and one or more interfaces. The management and control module is configured to deploy the IRS node to a position, the routing module is configured to obtain a routing table for forwarding packets and the one or more interfaces are configured to communicate with a central IRS management module. In particular, the one or more communication modules may comprise at least one of: a fixed network termination, FT, module, a mobile termination, MT, module, a forwarding, FW, module, an access point, AP, module, and a distributed unit, DU, module. The FT module is configured to integrate the IRS node with a fixed network; the MT module is configured to integrate the IRS node with a mobile network; the FW module is configured to communicate with at least one other forwarding module in at least one other IRS node and relay traffic with the at least one other IRS node; the AP module is configured to provide data access service for terminals based on a wireless communication protocol; and the DU module is configured to provide mobile network access service for terminals based on a mobile network protocol. As the IRS node may have different communication modules, it may flexibly work in different roles in the IRS, so that making the IRS to be flexible to deploy and modify according to the needs for network access by UEs.

Some examples further provide a traffic shaping module, which is configured to shape data traffic to increase efficiency of packet relay and assure required Quality of Service, QoS.

In these examples, the management and control module may be configured to optimize the deployment of the IRS node by assessing radio link quality and/or spectrum efficiency of radio links between the IRS node and neighboring IRS nodes of the IRS node and/or between a mobile integration node, MIN, and a radio cell of the mobile network. The assessment on radio link quality and/or spectrum efficiency of radio links and/or the quality of its services, determines the necessities of optimization and/or how to make the optimization in some examples.

Some examples further comprise an attachment module, which is configured to attach the one or more communication modules to the IRS node and/or attach the IRS node on or in an autonomous movable device. Based on the functions of the attachment module, communication modules become movable.

In some examples, the IRS node is a forwarding node, FN, with the MT module and the FW module, where the FW module is configured to forwarding information in the IRS. With the FW module, FN may forward information between the AN and a network-side device, such as MIN or FIN (Mobile or Fixed Integration Node), so that the coverage of IRS is extended and so that the AN could be deployed farther away if a plurality of FNs are deployed.

In some examples, the IRS node is a mobile integration node, MIN, with the MT module and the FW module, where the MT module and the FW module are configured to integrate the IRS with a mobile network. With the MIN, the IRS could be coupled with the mobile network, enabling the IRS to work together with the existing mobile network.

In some other examples, the IRS node is a fixed integration node, FIN, with the FT module and the FW module, where the FT module and the FW module are configured to integrate the IRS with a fixed network. Via the FIN, the IRS could be coupled with the fixed network, enabling the IRS to work together with the existing fixed network.

In yet some other examples, the IRS node is an access node, AN, for a user equipment, UE, to access a mobile network via the DU module, where the DU module is configured to connect via an internet protocol, IP, connection with a control unit (CU) of a base station deployed in a mobile network or a fixed network. The AN can be deployed at any position in which it is needed (where coverage is needed). Therefore, it indicates the flexibility of the IRS.

The roles of FN, MIN, FIN and AN of the IRS node indicate the flexibility of the IRS nodes. The construction and operation of an IRS based on a plurality of such IRS nodes will consequently be flexible.

In at least some of the above examples, the FW module is configured to communicate with the at least one other IRS node based on at least one omnidirectional antenna and/or at least one directional antenna, and where the at least one antenna operates on a same frequency band as, or a frequency different from a frequency band on which an antenna of the MT module, UE module or AP module is operated. Therefore, the example provides good flexibility on type and/or frequency selection of antennas.

In at least some of the above examples, the management and control module is configured to deploy the IRS node to the position based on one or more instructions from the central IRS management module and/or based on network assessment implemented by the IRS node. The management and control module enables the IRS node to deploy itself to a specific position, achieving the flexibility of the IRS node and consequentially the flexibility of the IRS.

In at least some of the above examples, the routing module is configured to obtain the routing table based on routing information received from the central IRS management module and/or routing information received from other IRS nodes in the IRS. If the IRS node does not need to generate the routing table based on complex communications with its neighboring IRS nodes, the efficiency of the IRS can be improved.

In at least some of the above examples, in response to losing connection with the central IRS management module, the IRS node is configured to connect a mobile network or another IRS node. As it provides an example of dealing with failures of connection with the central IRS management module, the stability or the robustness of the IRS node is improved.

Some other examples provide a managing apparatus. The managing apparatus comprises a central intelligent relay system, IRS, management module, which is configured to obtain deployment locations respectively for a plurality of IRS nodes, and then is further configured to send instructions carrying the deployment locations to the plurality of IRS nodes to make each of the IRS nodes to receive its respective deployment location. In this way, the managing apparatus may inform the plurality of IRS nodes of the locations where the IRS nodes should be deployed. The IRS nodes that received these locations may then deploy themselves to these locations respectively. Therefore, the IRS nodes may be deployed efficiently to a position selected by the managing apparatus, substantially improving the flexibility of the IRS.

In these examples, the central IRS management module may be configured to obtain respective routing information for each of the plurality of IRS nodes; and send the respective routing information to each of the plurality of IRS nodes. Based on this function, the IRS node could save a lot of time for generating its routing table by itself.

Another example provides a computer program having a program code for making a computer, a processor, or a programmable hardware component to be one IRS node or the managing apparatus described herein, when the computer program is executed by the computer, the processor, or the programmable hardware component.

Yet another example provides a method that the IRS node or the managing apparatus described herein is configured to implement.

A method for deploying an IRS node in an IRS is another example. The method comprises communicating with a central IRS management module and deploying the IRS node to a position. The method also comprises obtaining a routing table for forwarding packets and enabling network connectivity of the IRS node in the IRS by performing at least one of the following operations: integrating the IRS node with a fixed network, integrating the IRS node with a mobile network, communicating with at least one other IRS node and relay traffic with the at least one other IRS node, providing data access service for terminals based on a wireless communication protocol, and providing mobile network access service for terminals based on a mobile network protocol.

Another example is a method for managing an IRS comprising obtaining deployment locations respectively for a plurality of IRS nodes and sending instructions carrying the deployment locations to the plurality of IRS nodes to make each of the IRS nodes to receive its respective deployment location.

A method of manufacturing the IRS node or the managing apparatus described herein is one more example.

Another example is a computer program having program code for performing one of the methods of the present disclosure, when the computer program is executed on a computer, a processor, or a programmable hardware component.

### Brief description of the Figures

Some examples of apparatuses and/or methods will be described in the following by way of example only, and with reference to the accompanying figures, in which
Fig. 1 shows an example of the implementation of IAB;
Fig. 2 shows an example of the basic architecture and protocol stack of IAB;
Fig. 3 shows an example of a drone in which an IRS node may be implemented;
Fig. 4 shows an example of an IRS node 40 that may be used to establish an IRS;
Fig. 5 shows an example of a network 50 in which the deployment of Intelligent Relay System (IRS) 500 is integrated via a mobile network (MN) 540;
Fig. 6 shows an example of a network 60 in which the deployment of IRS 600 is integrated via a fixed network;
Fig. 7 shows an example of a central IRS management module 70 comprised in a managing apparatus 700;
Fig. 8 shows an example of a management and control module 80;
Fig. 9 shows a flow chart of an example of a method 900 for deploying the IRS node 40 in the IRS;
Fig. 10 shows a flow chart of an example of managing the IRS at the managing apparatus 700; and
Fig. 11 shows an example of the structure of the managing apparatus 700 shown in Fig. 7.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

Some additional terminologies are defined hereinafter. The meanings of some of all the terminologies could be used in some examples provided hereinafter for reference.

To overcome some limitations of IAB, some examples propose an intelligent relay system (IRS) that can be deployed flexibly and autonomously.

Fig. 3 shows an example of drone in which an IRS node may be implemented. In some examples, a self-organizing IRS can be deployed anywhere and anytime by implementing an IRS node in an unmanned vehicle, e.g. a drone shown by Fig. 3, or in other vehicles.

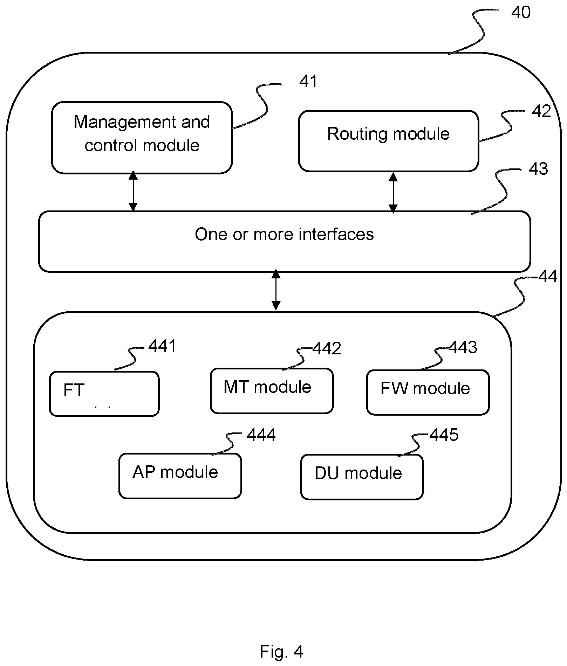

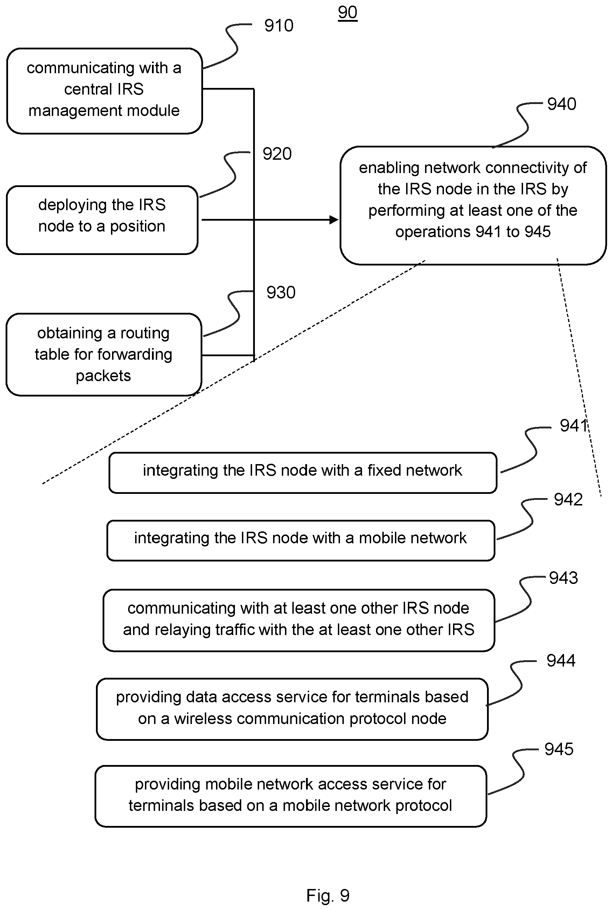

Fig. 4 shows an example of an IRS node 40 that may be used to establish an IRS. Fig. 9 shows a flow chart of an example of a method 900 for deploying the IRS node 40 in the IRS.

The IRS is a new system comprising a plurality of IRS nodes working in different roles. The IRS is a relay system that uses one or more intermediate nodes in multi-hop transmission. As outlined in more detail subsequently, the relay system may connect or extend different communication systems, such as fixed or mobile networks. The relay system is made intelligent by using configurable nodes, which can be configured to assume different roles in the IRS and with at least some autonomous or automatic functions. Based on the needs for network access by UEs, the IRS could assign one or more IRS nodes to work in a specific area in their specific roles, such as forwarding nodes and/or access nodes. Furthermore, the IRS nodes deployed by the IRS could move to their positions autonomously to provide their services. In this way, the IRS may be deployed and modified dynamically and autonomously, achieving high flexibility and scalability.

The IRS node 40 comprises a management and control module 41, a routing module 42, one or more interfaces 43 and one or more communication modules 44. In some examples, the management and control module 41 is configured to deploy the IRS node to a position and the routing module 42 is configured to obtain a routing table for forwarding packets. The one or more interfaces 43 are configured to communicate with a central IRS management module and the one or more communication modules 44 are configured to enable network connectivity of the IRS node in the IRS. A corresponding method 90, which is carried out at the IRS node 40, is shown in Fig. 9. The method 90 comprises communicating 910 with a central IRS management module, deploying 920 the IRS node 40 to a position, and obtaining 930 a routing able for forwarding packets. The method 90 further comprises enabling 940 network connectivity of the IRS node 40 in the IRS by performing at least one of the operations 941 to 945, which are integrating 941 the IRS node with a fixed network, integrating 942 the IRS node with a mobile network, communicating 943 with at least one other IRS node and relay traffic with the at least one other IRS, providing 944 data access service for terminals based on a wireless communication protocol node, and providing 945 mobile network access service for terminals based on a mobile network protocol.

In examples, the one or more communication modules 44 comprises at least one of a fixed network termination, FT, module 441, a mobile termination, MT, module 442, a forwarding, FW, module 443, an access point, AP, module 444, and a distributed unit, DU, module 445. The FT module 441 is configured to integrate the IRS node with a fixed network; the MT module 442 is configured to integrate the IRS node with a mobile network; the FW module 443 is configured to communicate with at least one other forwarding module in at least one other IRS node and relay traffic with the at least one other IRS node; the AP module 444 is configured to provide data access service for terminals based on a wireless communication protocol; and the DU module 445 is configured to provide mobile network access service for terminals based on a mobile network protocol.

In some examples, the management and control module 41, which is also called a management and control layer, is configured to manage and control the IRS node 40. In addition to general management and control function for a network node, like configuration and software update, the management and control module 41 has some IRS specific functions. For example, the IRS specific functions include positioning an IRS node, associating the IRS node 40 with other IRS nodes in the IRS or integrating the IRS node 40 or the IRS including the IRS node 40 with a mobile network or fixed network. The management and control module 41 supports centralized and/or decentralized functions. For example, a central IRS management module can instruct the management and control module 41 in the IRS node 40 to deploy the IRS node 40 to a specific location. The Management and control module 41 in the IRS node 40 can also position itself autonomously.

In some examples, the mobile network provides wireless communication services to mobile devices and comprises a Radio Access Network (RAN) and a Core Network. The RAN connects user devices to the Core Network and the Core Network manages user sessions, mobility and data routing. The fixed network provides communication services through wired or fixed wireless connections and comprises an Access Network and a Core Network. The Access Network connects end users to the network using technologies like Digital Subscriber Line (DSL), fiber or cable. The Core Network in the fixed network is optimized for fixed connections.

The routing module 42 is configured to create route tables for forwarding packets. In some examples, the routing module 42 may be called a routing layer.

The communication modules 44 enable network connectivity of the IRS node 40. The FT module 441 is a fixed network termination and allows the IRS node 40 to be integrated with a fixed network. For example, the FT module 441 may be an Ethernet port or a WiFi access terminal. In some examples, the FT module can be configured in the IRS node 40 only when the IRS node 30 is configured as a FIN (Fixed network integration node).

The MT module 442 is a mobile termination and allows IRS node 40 to work as a MIN (Mobile Integration Node), which may be integrated with a mobile network. The MT module 442 may be configured in the IRS node 40 when the role of the IRS node 40 is not a MIN, which is configured to enable the IRS node 40 to communicate with an IRS central management module via a mobile network. For example, the MT module could be configured in the IRS node 40 when the IRS node 40 is configured as or works as a MIN (Mobile Integration Node) or as an FN (Forwarding Node).

The FW module 443 is configured to realize a relay function of the IRS node 40. The FW module 443 communicates with another FW module in another IRS node.

The AP module 444 is configured in the IRS node 40 if the IRS node 40 is configured as a WiFi AP and the DU module 445 is configured in the IRS node 440 if the IRS node 40 is configured as an access node of a 5G or future mobile networks.

The one or more interfaces 43 may be wireless interfaces and/or wired interfaces. For example, the wireless interfaces may comprise antennas based on wireless protocols, such as Wi-Fi, Bluetooth and/or 3GPP Cellular protocols. The wired interfaces may comprise RJ 45 interfaces and/or USB (Universal Serial Bus) interfaces based on Ethernet and/or Local Area Network LAN, etc.

In some examples, the IRS node 40 may further comprise a traffic shaping module, which is configured to shape the traffic to increase efficiency of packet relay and assure required Quality of Service (QoS) accordingly. The traffic shaping module may be called traffic shaping layer. In a corresponding method 90, the method further comprises: shaping data traffic to increase efficiency of packet relay and assure required Quality of Service (QoS).

In some examples, all the modules in Fig. 4 are hardware modules which are based on field programmable gate arrays (FPGAs), application-specific integrated circuits (ASICs), antennas or specially designed chips. In some other examples, at least some or all the modules shown in FIG. 4 are implemented based on both software and hardware. For example, each module could has a set of corresponding computer-readable programs or instructions stored in the memory of the IRS node 40, where the memory may be one or more memory units, such as Random Access Memory (RAM) units and/or Read Only Memory (RAM) units in the form of Hard Disk Drive (HDD), Solid State Drive (SSD), Optical Disc, Universal Serial Bus (USB), Flash Drive and/or Memory Card, etc. When a set of corresponding computer-readable programs are implemented by a processor of the IRS node 40, the functions of a corresponding module are implemented. The processor may comprise one or more control processing units (CPUs), graphical processing units (GPUs), neutral processing units (NPUs), artificial intelligence (Al) processors, field programmable gate arrays (FPGAs), application-specific integrated circuits (ASICs), systems on chip (SoCs) and/or other hardware processors capable of implementing computer-readable programs.

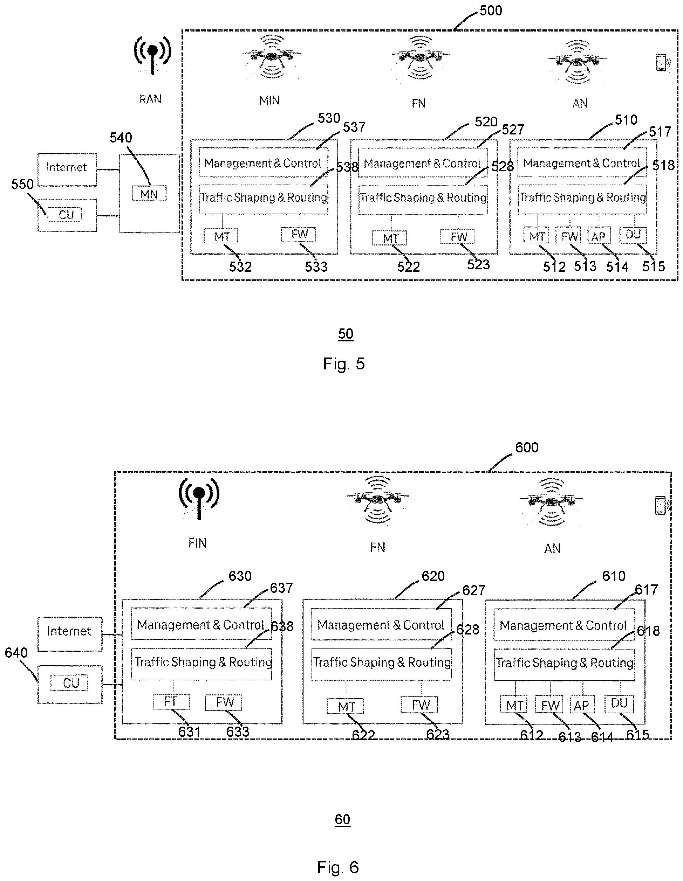

Fig. 5 shows an example of network 50 in which the deployment of Intelligent Relay System (IRS) 500 is integrated via a mobile network (MN) 540. IRS nodes 510 to 530 are examples of IRS node 40 as shown in Fig. 4, while the three IRS nodes Access Node (AN) 510, Forwarding Node (FN) 520, and Mobile Integration Node (MIN) 530 shown in Fig. 5 work in different roles and consequently have their alternative names.

The MIN 530 is configured to integrate the IRS with a mobile network 540 based on the communication modules MT 532 and FW 533 in the MIN 530. The MT module 532 is configured to integrate the MIN 530 with a mobile network, such as MN 540. The FW module 533 is configured to communicate with at least one other forwarding module in at least one other IRS node, such as FW module 523 in the FN 520, and relay traffic with the at least one other IRS node. According to a corresponding method 90, the method may comprise: integrating the IRS with a mobile network when the IRS node is a MIN.

The FN 520 is deployed between the MIN 530 and the AN 510 and is configured to extend coverage of the IRS 500 by extending AN 510. The FN 520 comprises modules MT 522 and FW 523. The FW module 523 is configured to forward information in the IRS. The MT module 522 is configured for the FN 520 to communicate with a mobile network, such as MN 540. The FW module 523 is configured to communicate with at least one other forwarding module in at least one other IRS node, such as FW module 533 in MIN 530 and FW 513 in AN 510, and relay traffic with the at least one other IRS node. According to the corresponding method 90, the method may comprise: forwarding information in the IRS.

Although Fig. 5 just shows one FN 520, a plurality of FN 520 may be deployed between MIN 530 and AN 510 in some other examples. In some further examples, the IRS 500 may comprise a plurality of MINs 530 and a plurality of ANs 510, where a plurality of FNs 520 are deployed between a MIN 530 and an AN 510.

The AN 510 comprises a MT module 512 and a FW module 513, and further comprises an Access Point (AP) module 514 and a Distributed Unit (DU) module 515. The MT module 512 is configured for the AN 510 to communicate with a mobile network, such as MN 540. The FW module 513 is configured to communicate with at least one other forwarding module in at least one other IRS node, such as FW module 523 in FN 520, and relay traffic with the at least one other IRS node.

The DU module 515 is configured to connect, via an internet protocol, IP, connection, with a control unit of a base station deployed in a mobile network or a fixed network. In some examples, AN is configured to provide mobile network access service for terminals/UEs based on a mobile network protocol. As shown in Fig. 5, the DU module 515 is configured to be coupled with a Control Unit (CU) 550 behind the mobile network 540 via an F1 interface based on IP connectivity through the MN 540, MIN 530, FN 520 and AN 510. For example, a UE can be connected to Internet via the DU module 515 in AN 510 by 5G and/or future mobile network interface. According to the corresponding method 90, the method may comprise: connect via an IP connection with a control unit of a base station deployed in a mobile network or a fixed network.

The AP module 514 is configured to provide data access service for terminals based on a wireless communication protocol. For example, based on a wireless communication protocol Wi-Fi, a UE can access Internet through the AP module 514 configured in AN 510 without the involvement of the DU module 515 and CU 550. Then the AP module 514 may provide data access service for the UE based on Wi-Fi. In some examples, the AN 510 does not have to comprise the DU module 515 and the AP module 514 at the same time. A single one of these two module might meet the requirement of network access for some UEs.

In some examples, MIN 530 and FN 520 can be further configured with an AP module 514 and/or a DU module 515 to provide internet access for UEs as well. Therefore, MIN 530 and FN 520 have the capability of working as an AN 510, which enables UEs to access internet, while MIN 530 and FN 520 are working in their own roles as a MIN and a FIN.

Fig. 6 shows an example of a network 60 in which the deployment of IRS 600 is integrated via a fixed network. IRS nodes 610 to 630 are examples of IRS node 40 as shown in Fig. 4, while the three IRS nodes AN 610, FN 620, and Fixed Network Integration Node (FIN) 630 shown in Fig. 6 work in different roles and consequently have their alternative names.

The FIN 630 is configured to integrate IRS 600 with a fixed network based on the communication modules FW 633 and FT 634. The FN (Forward Node) 620 is deployed between the FIN 630 and the AN (Access node) 610 to extend coverage of the IRS 600. A DU module 615 in the AN 610 is coupled with CU 640 via an F1 interface based on IP connectivity through a fixed network, FIN 630, FN 620 and AN 610. In some examples, the UE can access Internet through an AP module 614 configured in AN 610 using WiFi without involvement of CU 640 and the DU module 615. A UE can also be connected to Internet via the DU module 615 in AN 610 using 5G and/or future mobile network interface. Depending on communication demands, FIN 630 and FN 620 can be also configured with an AP module and/or a DU module to provide internet access for UEs. Therefore, FIN 630 and FN 620 have the capability of working as an AN 610, which enables UEs to access internet, while FIN 630 and FN 620 are working in their own roles as a FIN and a FN. According to the corresponding method 90, the method may comprise: integrating the IRS with a fixed network when the IRS node is a FIN.

A FW module, such as FW modules 513, 523 and 533 in Fig. 5 and FW modules 613, 623 and 633 in FIG. 6, is configured to implement communications between IRS nodes. In particular, FW modules can use omnidirectional antennas and/or directional antennas for sending and/receiving information. In some examples, FW modules on different IRS nodes can operate on the same frequency band as the frequency of MT modules, UEs, and/or AP modules. In some other examples, FW modules operate on a frequency different from the frequency of MT modules, UEs, and/or AP modules. For example, an MT module can operate in C-Band while one or more FW modules operate in mmWave band. According to the corresponding method 90, the method may further comprise: communicating with the at least one other IRS node based on at least one omnidirectional antenna and/or at least one directional antenna, and wherein the at least one antenna operates on a same frequency band as, or a frequency different from a frequency band on which an antenna of the MT module, UE module or AP module is operated.

As shown in Figs. 5 and 6, the IRS nodes in these two networks have management and control modules 517 to 537 and 617 to 637. In some examples, the management and control modules 517 to 537 and 617 to 637 are the same as the management and control module 41 shown in Fig. 4. The management and control module 41, 517 to 537, and 617 to 637 is configured to deploy the IRS node to a position, so that the network service at or associated with the position could be improved. For example, the management and control module is configured to deploy the IRS node to the position based on one or more instructions from a central IRS management module and/or based on network assessment implemented by the IRS node. In the corresponding method 90, the method 90 further may comprise: deploying the IRS node to the position based on one or more instructions from a central IRS management module and/or based on network assessment implemented by the IRS node.

In some examples, the management and control module 41, 517 to 537, and 617 to 637 is configured to optimize the deployment of the IRS node 40, 510 to 530, 610 to 630 by assessing radio link quality and/or spectrum efficiency of radio links between the IRS node and neighboring IRS nodes of the IRS node and/or between a MIN and a radio cell of the mobile network. In the corresponding method 90, the method 90 further may comprise: optimizing the deployment of the IRS node 40, 510 to 530, 610 to 630 by assessing radio link quality and/or spectrum efficiency of radio links between the IRS node and neighboring IRS nodes of the IRS node and/or between a MIN and a radio cell of the mobile network.

In some examples, besides modules shown in Fig. 4, the IRS node 40, 510 to 530, 610 to 630 may further comprise a traffic shaping module, which is configured to shape data traffic to increase efficiency of packet relay and assure required Quality of Service, QoS. In a more specific example, traffic shaping module is configured to aggregate a plurality of small packets to a large packet. When the transmission of a huge number of small packets via the FW module 443 of an IRS node 40 are replaced by a smaller number of large packets, the network efficiency is increased. In some further examples, the traffic shaping module is configured to set, depending on the types of packets, priority in the packets to prioritize the forwarding of the packets. For example, time critical packets could get highest priority for forwarding, while signaling packets will be handled with highest reliability, etc. In some examples, the traffic shaping module and routing module are combined in one module called Traffic Shaping and Routing module as shown in Figs. 5 and 6.

The routing module 42, 518 to 538, and 618 to 638 is configured to obtain the routing table based on routing information received from the central IRS management module and/or routing information received from other IRS nodes in the IRS. In other words, the routing module in some examples can obtain the routing table without the help of the central IRS management module. In some examples, the routing module 42, 518 to 538, and 618 to 638 is configured to generate routes for routing packets to a next hop IRS node or to a local communication module in the same IRS node. The generated routes may be sent by the IRS node 30 to its neighbors in the IRS via hello packets or other packets. According to the corresponding method 90, the method may comprise: obtaining the routing table based on routing information received from the central IRS management module and/or routing information received from other IRS nodes in the IRS. Although the name of module 518 to 538, and 618 to 638 is Traffic Shaping and Routing module, it is the combination of a traffic shaping module and a routing module. When the function of the routing module of the Traffic Shaping and Routing module is discussed, the Traffic Shaping and Routing module is also referred to as a routing module in some examples.

In some examples, the IRS node 40, 510 to 530, 610 to 630 further comprises an attachment module, where the attachment module is configured to attach the one or more communication modules, such as the modules FT, MT, FW, AP and DU, to the IRS node and/or attach the IRS node on or in an autonomous movable apparatus, such as a drone or an autonomous vehicle. The attachment module may comprise locking clasps, quick-release plates, mounting brackets, and/or magnetic mount plate. In the corresponding method 90, the method may comprise: attaching the one or more communication modules 44 to the IRS node 40, 510 to 530, 610 to 630 and/or attaching the IRS node on or in an autonomous movable device.

In some examples, the structures of networks 50 and 60 are simple and it is possible that FNs 520, 620 do not exist in a certain time slot, which means AN 510, 610 are directly coupled with MIN 530 or FIN 630. In some other examples, the MIN 530 in Fig. 5 can work as an AN 510 without the involvement of any FN or AN if the MIN 530 has the AP module and/or the DU module.

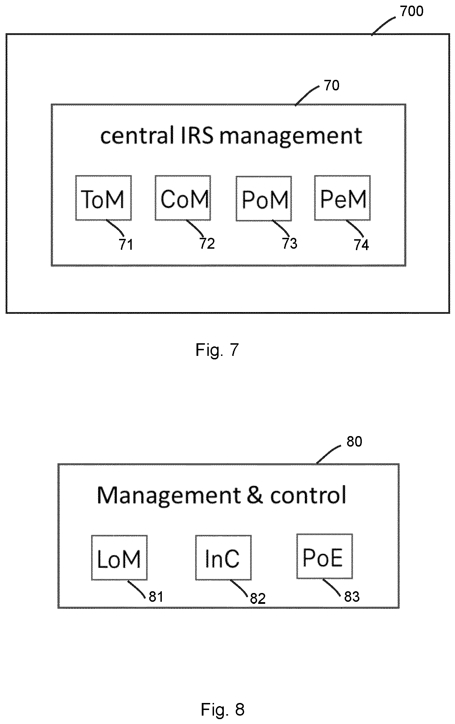

In some examples, the IRS nodes 40, 510 to 530, 610 to 630, need to receive instructions from a central IRS management module as shown in Fig. 7. The instructions are used to perform at least one of the following actions: assigning roles to IRS nodes, providing rough or accurate location information for IRS nodes, and/or providing policies for traffic shaping or QoS assurance. In particular, the FT, MT and/or FW are configured to communicate with the central IRS management module to receive the above instructions.

As shown in Fig. 9, some examples of the method 900 for deploying the IRS node 40 in an IRS comprise the following operations:
communicating 910 with a central IRS management module; deploying 920 the IRS node 40 to a position; obtaining 930 a routing able for forwarding packets;; and enabling 940 network connectivity of the IRS node 40 in the IRS by performing at least one of the operations 941 to 945, which comprise: integrating 941 the IRS node with a fixed network, integrating 942 the IRS node with a mobile network, communicating 943 with at least one other IRS node and relaying traffic with the at least one other IRS, providing 944 data access service for terminals based on a wireless communication protocol node, and providing 945 mobile network access service for terminals based on a mobile network protocol.

According to method 90, the IRS could assign one or more IRS nodes 40 to work in a specific area in their specific roles, such as forwarding nodes and/or access nodes. Furthermore, the IRS nodes deployed by the IRS could move to their positions autonomously to provide their services. In this way, the IRS may be deployed and modified dynamically and autonomously, achieving high flexibility and scalability.

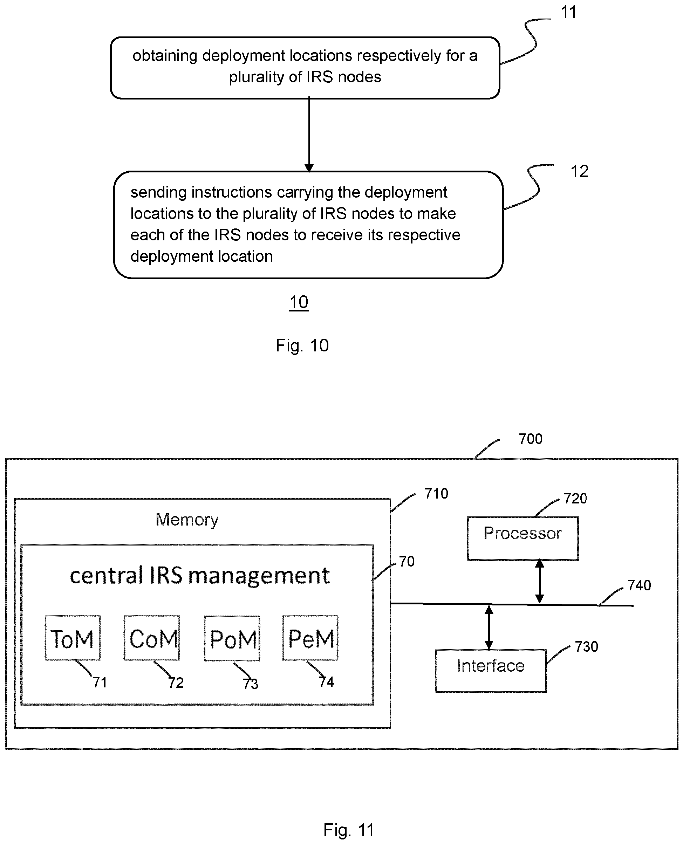

Fig. 7 shows an example of a central IRS management module 70 comprised in a managing apparatus 700. The central IRS management module 70 comprises at least one of Topology management (ToM) sub-module 71, Configuration management (CoM) sub-module 72, Policy Management (PoM) sub-module 73, and Performance management (PeM) sub-module 74. Fig. 10 shows a flow chart of an example of managing the IRS at the managing apparatus 700.

Fig. 8 shows an example of a management and control module 80. In some examples, the management and control module 80 is the same as the management and control module 41, 517 to 537, 617 to 637. The management and control module 80 is configured to communicate with the central IRS management module 70. In particular, in order to communicate with the central IRS management module 70, the management and control module 80 comprises at least one of Location management (LoM) sub-module 81, IRS node control (InC) sub-module 82 and policy enhancement (PoE) sub-module 83.

In some examples, the central IRS management module 70 in the managing apparatus 700 is configured to obtain deployment locations respectively for a plurality of IRS nodes, and then send instructions carrying the deployment locations to the plurality of IRS nodes to make each of the IRS nodes to receive its respective deployment location. Based on the instructions sent to the IRS nodes, the managing apparatus 700 helps the IRS nodes to establish an IRS and/or improve the capability of the IRS when some new requirements occur, or some portions of the IRS degrade. According to the corresponding method 10, the method 10 comprises: obtaining 11 deployment locations respectively for a plurality of IRS nodes; and sending 12 instructions carrying the deployment locations to the plurality of IRS nodes to make each of the IRS nodes to receive its respective deployment location.

In some further examples, the central IRS management module in the managing apparatus 700 is configured to obtain respective routing information for each of the plurality of IRS nodes; and send the respective routing information to each of the plurality of IRS nodes. With the routing information sent by the managing apparatus 700, the IRS nodes save a lot of time on obtaining the routing information by themselves.

In some examples, the ToM sub-module 71 is configured to provide locations, for example rough locations, for MIN 530, FN 520 and AN 510. The ToM sub-module 71 may obtain the location of AN 510 by receiving the location from an apparatus in or working for the area requiring access service. The ToM sub-module 71 is configured to select a best suited radio cell or FIN to integrate an IRS with a mobile network or a fixed network. Traffic load and/or distance of radio cell or FIN to AN are comprised in a criterion for selecting the location of a radio cell or FIN for IRS integration. Based on results of a QoS prediction, the ToM may obtain the location of MIN or FIN and the location of FN. The results of the QoS prediction may be obtained by accessing an external service of QoS prediction, which may be implemented according to techniques described in patent applications EP24165040.7 and/or EP24162491.5.

The ToM sub-module 71 may send instructions carrying the location information to IRS nodes, so that LoM sub-modules 81 in the manage and control module 41 in the IRS nodes 40, 510 to 530, 610 to 630 will receive the location information. Upon reception of the location information from the central IRS management module 70 by an IRS node 40, 510 to 530, 610 to 630, the LoM sub-module 81 of the IRS node will navigate the IRS node to the deployment position indicated by the location information.

After arriving at the position or location indicated by the ToM sub-module 71 of the central IRS management module 70, the LoM sub-module 81 of the IRS node 40 will optimize the position of the IRS node 40 by assessing the quality of one or more radio links at the position. For an IRS node working as an FN 520, 620, the FN 520, 620 assesses the quality of the links between the FN 520, 620 and the neighbors of the FN to optimize the position of the FN. For an IRS node working as an AN 510, 610, the AN 510, 610 assesses the quality of radio links of the AN to optimize the position of the AN. The radio links of the AN comprises links between the AN and UEs, and one or more links connecting the AN with an FN, FIN or MIN in the IRS. The position of the AN may be adjusted in some situations, such as in a situation where a degraded link is detected after the initial position setup of the AN, and/or in a situation where a UE cannot get a link with a good quality to access the AN.

The CoM sub-module 72 of the central IRS management module 70 is configured to send one or more configuration instructions to InC sub-module 82 in the manage and control module in an IRS node 40, 510 to 530, 610 to 630. The one or more configuration instructions may comprise a role assigned for the IRS node. For example, the role assigned for the IRS node may be FIN, MIN, FN or AN. The one or more configuration instructions may comprise configuration parameters of communication modules, such as parameters of transmission power, and/or frequency band.

The PoM sub-module 73 of the central IRS management module 70 is configured to send one or more policy instructions to an IRS node 40, 510 to 530, 610 to 630. The one or more policy instructions may comprise policies for traffic shaping and/or QoS priority setting. In some examples, the policy instructions are sent to a PoE sub-module 83 of the manage and control module in the IRS node 40, 510 to 530, 610 to 630.

The PeM sub-module 74 of the central IRS management module 70 is configured to monitor the performance of the IRS nodes node 40, 510 to 530, 610 to 630 in the IRS by metering key performance indicator (KPI) of each IRS node. If performance degrading in an IRS node is detected by PeM sub-module 74, modification of the deployment of the IRS node will be initiated by the central IRS management module 70, e. g. adding an additional IRS node into the IRS to compensate the degraded IRS node.

In addition, the ToM sub-module 71 of the central IRS management module 70 in some examples is configured to send initial routes to IRS nodes 40, 510 to 530, 610 to 630 to set up initial IRS deployment.

In a case that an IRS node 40, 510 to 530, 610 to 630 loses its connection with the central IRS management module 70, the IRS node will move its position to connect itself to a mobile network via its MT module or connect itself to another I RS node via its FW module. According to the corresponding method 90, the method may comprise: connecting, in response to losing connection with the central IRS management module 80, a mobile network or another IRS node.

In some other examples, the IRS nodes 40, 510 to 530, 610 to 630, can operate in an autonomous mode without the need of receiving instructions from the central IRS management module. In other words, the IRS nodes may determine their roles, obtain their location information and/or obtain policies for traffic shaping or QoS assurance without the help of the central IRS management module. For example, an IRS node can position itself based on radio link quality and/or spectrum efficiency. In some other examples, an IRS node can associate with other IRS nodes to build an IRS autonomously, where the IRS nodes and the other IRS nodes are neighbors in the built IRS.

Fig. 11 shows an example of the structure of the managing apparatus 700 shown in Fig. 7. As shown in Fig. 11, the managing apparatus 700 comprises at least one memory 710, at least one processor 720 and at least one interface 730 coupled with each other via a bus 740. The memory 710 may be one or more memory units, such as Random Access Memory (RAM) units and/or Read Only Memory (RAM) units in the form of Hard Disk Drive (HDD), Solid State Drive (SSD), Optical Disc, Universal Serial Bus (USB), Flash Drive and/or Memory Card, etc.

The processor 720 may comprise one or more control processing units (CPUs), graphical processing units (GPUs), neutral processing units (NPUs), artificial intelligence (Al) processors, field programmable gate arrays (FPGAs), application-specific integrated circuits (ASICs), systems on chip (SoCs) and/or other hardware processors capable of implementing computer-readable programs. The interface 730 may be wireless interfaces and/or wired interfaces. For example, the wireless interfaces may comprise antennas based on wireless protocols, such as Wi-Fi, Bluetooth and/or 3GPP Cellular protocols. The wired interfaces may comprise RJ 45 interfaces and/or USB interfaces based on Ethernet and/or Local Access Network LAN, etc. In an example shown by Fig. 11, the central IRS management module is a software module stored in memory 710, and consequently sub-modules ToM 71, CoM 72, PoM 73 and PeM 74 are all software modules stored in memory 710. When the sub-modules ToM 71, CoM 72, PoM 73 and PeM 74 are executed by processor 720, the managing apparatus implements each of the functions of each sub-modules shown in Fig. 7, therefore the managing apparatus shown in Fig. 11 may implement each and each function of the managing apparatus shown in Fig. 7.

Some examples comprise an intelligent relay system (IRS) built from IRS nodes that can be configured with different communication modules to be deployed as MIN/FIN, FN or AN of the IRS.

In some examples, a central IRS management function/module manages IRS nodes via MT, FT or FW through sending instructions to IRS nodes and monitoring performance of them.

In some examples, a central IRS management function/module calculates initial deployment location of IRS nodes and sends initial location instructions to each IRS node.

In some examples, an IRS node optimizes its position autonomously by assessing radio link quality and/or spectrum efficiency.

In some examples, the IRS nodes can be deployed in drones or other unmanned vehicles.

In some examples, the IRS can be integrated with a mobile network via a mobile integration node (MIN) with communication modules MT and FW.

In some examples, the IRS can be integrated with a fixed network via a fixed integration node with communication modules FT and FW.

In some examples, a CU (Control Unit of a gNB) can be deployed in a telco network and coupled with DUs in IRS nodes.

In some examples, a DU in an AN allows a UE to be connected via 5G or future radio interfaces.

In some examples, FW in an IRS is responsible for connectivity between IRS nodes. FW can use omnidirectional antenna and/or directional antenna. It can operate on the same frequency band as MT/UE/AP or in different frequency band.

In some examples, an IRS node can work autonomously or according to instructions from a central IRS management function/module.

In some examples, Central IRS management function/module calculates initial routes and sends initial routing tables to IRS nodes.

In some examples, IRS nodes can associate IRS neighboring nodes and create routing tables via sending hello packet.

In some examples, an IRS node moves its position autonomously to connect a mobile network or an IRS node if it lost connection with central IRS management.

In some examples, the traffic shaping function/module aggregate small packets to improve the forwarding efficiency between IRS nodes.

**The aspects and features described** in relation to a particular one of the previous examples may also be combined with one or more of the further examples to replace an identical or similar feature of that further example or to additionally introduce the features into the further example.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to an apparatus or system, these aspects should also be understood as a description of the corresponding method. For example, a block, apparatus or functional aspect of the apparatus or system may correspond to a feature, such as a method step, of the corresponding method. Accordingly, aspects described in relation to a method shall also be understood as a description of a corresponding block, a corresponding element, a property or a functional feature of a corresponding or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An intelligent relay system, IRS, node (40, 510 to 530, 610 to 630), comprising:
a management and control module (41, 517 to 537, 617 to 637), configured to deploy the IRS node to a position;
a routing module (42, 518 to 538, 618 to 638), configured to obtain a routing table for forwarding packets;
one or more interfaces (43) configured to communicate with a central IRS management module (80); and
one or more communication modules (44), configured to enable network connectivity of the IRS node in an IRS, wherein the one or more communication modules comprises at least one of:
a fixed network termination, FT, module (441, 631), configured to integrate the IRS node with a fixed network,
a mobile termination, MT, module (442, 512 to 532, 612 to 622), configured to integrate the IRS node with a mobile network,
a forwarding, FW, module (443, 513 to 533, 613 to 633), configured to communicate with at least one other forwarding module in at least one other IRS node and relay traffic with the at least one other IRS node,
an access point, AP, module (444, 514, 614), configured to provide data access service for terminals based on a wireless communication protocol, and
a distributed unit, DU, module (445, 515, 615), configured to provide mobile network access service for terminals based on a mobile network protocol.

2. The IRS node of claim 1, further comprising:
a traffic shaping module, configured to shape data traffic to increase efficiency of packet relay and assure required Quality of Service, QoS.

3. The IRS node (40, 510 to 530, 610 to 630) of one of claims 1 to 2, wherein the management and control module (41, 517 to 537, 617 to 637) is configured to optimize the deployment of the IRS node (40, 510 to 530, 610 to 630) by assessing radio link quality and/or spectrum efficiency of radio links between the IRS node and neighboring IRS nodes of the IRS node and/or between a mobile integration node, MIN, and a radio cell of the mobile network.

4. The IRS node (40, 510 to 530, 610 to 630) of one of claims 1 to 3, further comprising: an attachment module, which is configured to attach the one or more communication modules (44) to the IRS node (40, 510 to 530, 610 to 630) and/or attach the IRS node on or in an autonomous movable device.

5. The IRS node (40, 510 to 530, 610 to 630) of one of claims 1 to 4, which is a mobile integration node, MIN (530), with the MT module (532) and the FW module (533), wherein the MT module (532) and the FW module (533) are configured to integrate the IRS with a mobile network (540).

6. The IRS node (40, 510 to 530, 610 to 630) of one of claims 1 to 4, which is a fixed integration node, FIN (630), with the FT module (631) and the FW module (633), wherein the FT module (631) and the FW module (633) are configured to integrate the IRS with a fixed network.

7. The IRS node (40, 510 to 530, 610 to 630) of one of claims 1 to 4, which is an access node, AN (510, 610), for a user equipment, UE, to access a mobile network via the DU module (515, 615), wherein the DU module (515, 615) is configured to connect via an internet protocol, IP, connection with a control unit of a base station deployed in a mobile network or a fixed network.

8. The IRS node (40, 510 to 530, 610 to 630) of one of claims 1 to 4, which is a forwarding node, FN (520, 620), with the MT module (522, 622) and the FW module (523, 623), wherein the FW module (523, 623) are configured to forward information in the IRS.

9. The IRS node (40, 510 to 530, 610 to 630) of one of claims 1 to 8, wherein the FW module (443) is configured to communicate with the at least one other IRS node based on at least one omnidirectional antenna and/or at least one directional antenna, and wherein the at least one antenna operates on a same frequency band as, or a frequency different from a frequency band on which an antenna of the MT module, UE module or AP module is operated.

10. The IRS node (40, 510 to 530, 610 to 630) of one of claims 1 to 9,
wherein management and control module (41, 517 to 537, 617 to 637) is configured to deploy the IRS node (40, 510 to 530, 610 to 630) to the position based on one or more instructions from the central IRS management module (70) and/or based on network assessment implemented by the IRS node;
wherein the routing module (42, 518 to 538, 618 to 638) is configured to obtain the routing table based on routing information received from the central IRS management module and/or routing information received from other IRS nodes in the IRS; and/or
in response to losing connection with the central IRS management module (80), the IRS node is configured to connect a mobile network or another IRS node.

11. A managing apparatus (700), comprising: a central intelligent relay system, IRS, management module (70), configured to
obtain deployment locations respectively for a plurality of IRS nodes, and
send instructions carrying the deployment locations to the plurality of IRS nodes to make each of the IRS nodes to receive its respective deployment location.

12. The managing apparatus (700) of claim 11, wherein the central IRS management module (80) is configured to:
obtain respective routing information for each of the plurality of IRS nodes; and
send the respective routing information to each of the plurality of IRS nodes.

13. A method (900) for deploying an, Intelligent Relay System, IRS node in an IRS, comprising:
communicating (910) with a central IRS management module (80);
deploying (920) the IRS node to a position;
obtaining (930) a routing table for forwarding packets; and
enabling (940) network connectivity of the IRS node in the IRS by performing at least one of the following operations:
integrating (941) the IRS node with a fixed network,
integrating (942) the IRS node with a mobile network,
communicating (943) with at least one other I RS node and relay traffic with the at least one other IRS node,
providing (944) data access service for terminals based on a wireless communication protocol, and
providing (945) mobile network access service for terminals based on a mobile network protocol.

14. A method (100) for managing an, Intelligent Relay System, IRS, comprising:
obtaining (110) deployment locations respectively for a plurality of IRS nodes; and
sending (120) instructions carrying the deployment locations to the plurality of IRS nodes to make each of the IRS nodes to receive its respective deployment location.

15. A computer program having program code for performing one of the methods of one of the claims 13 or 14, when the computer program is executed on a computer, a processor, or a programmable hardware component.

## Amended claims

### Amended claims in accordance with Rule 137(2) EPC.

1. An intelligent relay system, IRS, node (40, 510 to 530, 610 to 630), comprising:
a management and control module (41, 517 to 537, 617 to 637), configured to deploy the IRS node, which is movable, to a position;
a routing module (42, 518 to 538, 618 to 638), configured to obtain a routing table for forwarding packets;
one or more interfaces (43) configured to communicate with a central IRS management module (80); and
one or more communication modules (44), configured to enable network connectivity of the IRS node in an IRS, wherein the one or more communication modules comprises a distributed unit, DU, module (615), configured to couple with a control unit, CU, (640) in a fixed network to provide mobile network access service for terminals based on a mobile network protocol, and wherein the one or more communication modules further comprises at least one of:
a fixed network termination, FT, module (441, 631), configured to integrate the IRS node with a fixed network,
a mobile termination, MT, module (442, 512 to 532, 612 to 622), configured to integrate the IRS node with a mobile network,
a forwarding, FW, module (443, 513 to 533, 613 to 633), configured to communicate with at least one other forwarding module in at least one other IRS node and relay traffic with the at least one other IRS node, and
an access point, AP, module (444, 514, 614), configured to provide data access service for terminals based on a wireless communication protocol.

2. The IRS node of claim 1, further comprising:
a traffic shaping module, configured to shape data traffic to increase efficiency of packet relay and assure required Quality of Service, QoS.

3. The IRS node (40, 510 to 530, 610 to 630) of one of claims 1 to 2, wherein the management and control module (41, 517 to 537, 617 to 637) is configured to optimize the deployment of the IRS node (40, 510 to 530, 610 to 630) by assessing radio link quality and/or spectrum efficiency of radio links between the IRS node and neighboring IRS nodes of the IRS node and/or between a mobile integration node, MIN, and a radio cell of the mobile network.

4. The IRS node (40, 510 to 530, 610 to 630) of one of claims 1 to 3, further comprising: an attachment module, which is configured to attach the one or more communication modules (44) to the IRS node (40, 510 to 530, 610 to 630) and/or attach the IRS node on or in an autonomous movable device.

5. The IRS node (40, 510 to 530, 610 to 630) of one of claims 1 to 4, which is a mobile integration node, MIN (530), with the MT module (532) and the FW module (533), wherein the MT module (532) and the FW module (533) are configured to integrate the IRS with a mobile network (540).

6. The IRS node (40, 510 to 530, 610 to 630) of one of claims 1 to 4, which is a fixed integration node, FIN (630), with the FT module (631) and the FW module (633), wherein the FT module (631) and the FW module (633) are configured to integrate the IRS with a fixed network.

7. The IRS node (40, 510 to 530, 610 to 630) of one of claims 1 to 4, which is an access node, AN (510, 610), for a user equipment, UE,

8. The IRS node (40, 510 to 530, 610 to 630) of one of claims 1 to 4, which is a forwarding node, FN (520, 620), with the MT module (522, 622) and the FW module (523, 623), wherein the FW module (523, 623) are configured to forward information in the IRS.

9. The IRS node (40, 510 to 530, 610 to 630) of one of claims 1 to 8, wherein the FW module (443) is configured to communicate with the at least one other IRS node based on at least one omnidirectional antenna and/or at least one directional antenna, and wherein the at least one antenna operates on a same frequency band as, or a frequency different from a frequency band on which an antenna of the MT module, UE module or AP module is operated.

10. The IRS node (40, 510 to 530, 610 to 630) of one of claims 1 to 9,
wherein management and control module (41, 517 to 537, 617 to 637) is configured to deploy the IRS node (40, 510 to 530, 610 to 630) to the position based on one or more instructions from the central IRS management module (70) and/or based on network assessment implemented by the IRS node;
wherein the routing module (42, 518 to 538, 618 to 638) is configured to obtain the routing table based on routing information received from the central IRS management module and/or routing information received from other IRS nodes in the IRS; and/or
in response to losing connection with the central IRS management module (80), the IRS node is configured to connect a mobile network or another IRS node.

11. A system, comprising the IRS node (40, 510 to 530, 610 to 630) of any one of claims 1 to 10, and a managing apparatus (700), wherein the managing apparatus (70) comprises: a central intelligent relay system, IRS, management module (70), configured to obtain deployment locations respectively for a plurality of IRS nodes, and
send instructions carrying the deployment locations to the plurality of IRS nodes to make each of the IRS nodes to receive its respective deployment location.

12. A node, comprising:
a control unit, CU (640), configured to couple with a distributed unit (DU) module in an Intelligent Relay System, IRS, node (615), wherein the CU (640) is in a fixed network.

13. A method (900) for deploying an, Intelligent Relay System, IRS node in an IRS, comprising:
communicating (910) with a central IRS management module (80);
deploying (920) the IRS node to a position;
obtaining (930) a routing table for forwarding packets; and
enabling (940) network connectivity of the IRS node in the IRS by performing an operation of providing (945) mobile network access service for terminals based on a mobile network protocol, wherein a distributed unit, DU, module (615) in the IRS node couples with a control unit, CU, (640) in a fixed network to provide the mobile network access service, and wherein the network connectivity is enabled by further performing at least one of the following operations:
integrating (941) the IRS node with a fixed network,
integrating (942) the IRS node with a mobile network,
communicating (943) with at least one other IRS node and relay traffic with the at least one other IRS node, and
providing (944) data access service for terminals based on a wireless communication protocol.

14. The method of claim 13, comprising:
obtaining (110), by the IRS, deployment locations respectively for a plurality of IRS nodes; and
sending (120), by the IRS, instructions carrying the deployment locations to the plurality of IRS nodes to make each of the IRS nodes to receive its respective deployment location.

15. A computer program having program code for performing one of the methods of one of the claims 13 or 14, when the computer program is executed on a computer, a processor, or a programmable hardware component.
